# FASCICULE DE BREVET EUROPEEN

(11) **EP 2 364 928 B1**
(45) Date de publication et mention de la délivrance du brevet: **01.06.2016**
(21) Numéro de dépôt: 11155823.5
(22) Date de dépôt: 24.02.2011
(51) Int. Cl.: B65D 83/00, B29C 45/00, B29C 45/16

(54) **Récipient distributeur**
Dosierbehälter
Dispensing container

(30) Priorité: 11.03.2010 FR 1051763
(43) Date de publication de la demande: 14.09.2011
(73) Titulaire: Cadorit AG, 4132 Muttenz Basel Landshaft (CH)
(72) Inventeur: Guillon, Bruno, 06400, Cannes (FR); Guilbert, Bruno, 06510, Cannes-La-Bocca (FR)
(74) Mandataire: de Zeeuw, Johan Diederick

(56) Documents cités:
- EP-A1- 1 106 530
- FR-A1- 2 903 092
- GB-A- 293 406
- US-A- 4 103 772
- US-A- 6 117 538
- US-A1- 2004 227 271
- US-B1- 6 257 454

## Description

### Domaine de l'invention

La présente invention concerne le domaine de conditionnement d'un produit sous forme liquide, tel qu'un soluté, et des produits sous forme pâteuse.

L'invention concerne plus particulièrement un récipient pourvu de moyens permettant de faire sortir une dose de ce produit contenu dans le récipient grâce à une pression manuelle.

### État de l'art

Dans le domaine du conditionnement, il existe une quantité importante d'emballages et de récipients connus pour emballer un produit, en s'assurant que le produit conserve ses caractéristiques propres, et être vendus au grand public.

En ce qui concerne les produits sous forme liquide et sous forme pâteuse, dans l'art antérieur, des récipients sont divulgués, capables de faire sortir une dose de produits grâce à une pression manuelle. De tels types d'emballages sont formés, par exemple, à l'aide de tubes réalisés en matière souple ou bien en forme de bouteilles, de matériau souple également.

En déformant l'extérieur de l'emballage, une pression peut être générée à l'intérieur de l'emballage afin de faire sortir une quantité de produit. Les emballages connus dans l'art antérieur présentent plusieurs inconvénients. Le premier d'entre eux réside dans le fait que la plupart des emballages doivent être remplis au cours de la procédure de production de l'emballage lui-même. Par exemple, dans le cas de tubes, ceux-ci sont tout d'abord remplis jusqu'à un niveau déterminé et, par la suite, fermé sous pression afin d'assurer l'étanchéité du contenu à l'intérieur de l'emballage.

La demande de brevet européen EP1106530 décrit un emballage comportant un corps pour recevoir une quantité de produit d'une première matière relativement rigide, sur lequel un fond est fixé. Ledit fond comprend un matériau souple permettant au contenu de l'emballage d'être extrait dudit emballage grâce à une pression du doigt sur le fond souple. L'emballage selon EP1106530 présente l'inconvénient de devoir être rempli au cours de la production dudit emballage, c'est-à-dire que le produit fluide ou pâteux emballé dans l'emballage doit être introduit à l'intérieur du corps de l'emballage avant que le fond de l'emballage soit connecté audit corps de l'emballage.

Ce document divulgue un récipient selon le préambule de la revendication 1. La demande de brevet FR2903092 divulgue un distributeur de produit fluide dans lequel le distributeur comporte un corps pour recevoir ce produit fluide, le corps comportant un premier et un deuxième éléments pouvant être déplacés l'un par rapport à l'autre afin d'extraire du produit fluide du distributeur.

### Résumé de l'invention

Le but de la présente invention est de proposer un récipient destiné à contenir un produit sous forme liquide ou pâteuse afin de résoudre aux moins certains des inconvénients déjà connus de l'art antérieur.

L'objet de la présente invention concerne un récipient comprenant un corps de récipient, un fond fixé à une première extrémité du corps de récipient, un distributeur pour fermer la deuxième extrémité du corps de récipient, pourvu d'une ouverture permettant la sortie du contenu du récipient et un bouchon permettant d'obturer l'ouverture du distributeur, dans lequel le corps du récipient est réalisé dans un matériau rigide et le fond est réalisé dans un matériau souple pour permettre la déformation du fond sous la pression manuelle et dans lequel le fond est réalisé de sorte que la déformation du fond ait pour effet une réduction du volume interne du récipient, caractérisé en ce que la liaison entre le corps, en matière rigide, et le fond, en matière souple, est une liaison par adhésion chimique. Le fond est indissociable du corps et l'étanchéité garantie est améliorée par rapport à un assemblage.

Un avantage majeur du récipient selon la présente invention réside dans le fait que le corps du récipient est réalisé dans un matériau rigide. Les caractéristiques de ce matériau peuvent être déterminées afin d'assurer une parfaite protection du produit contenu à l'intérieur du récipient.

Grâce à une adhésion chimique, c'est-à-dire une liaison parfaitement étanche et indémontable, un fond souple est connecté au corps du récipient selon la présente invention. En d'autres termes, la liaison parfaite entre le fond et le corps du récipient est assurée de façon optimale. Lorsque le corps et le fonds du récipient sont connectés ensemble, le récipient peut alors être rempli et ensuite fermé grâce au distributeur et au bouchon.

Selon un mode de réalisation préféré, la liaison entre le corps de récipient et le fond est obtenue par surmoulage. L'utilisation du surmoulage offre la possibilité, de façon pratique et optimale, de connecter correctement le fond et le corps du récipient.

Selon un mode de réalisation préféré, le corps de récipient est obtenu grâce à une matière thermoplastique injectée par au moins un point d'injection, et dans lequel la liaison entre le corps du récipient et le fond est réalisée de sorte que la matière du fond cache au moins ce point d'injection.
Afin d'obtenir le corps du récipient, il est possible d'utiliser un procédé dans lequel une matière thermoplastique est injectée dans un moule. Ce procédé laisse toujours une petite trace du point d'injection visible sur le produit fini qui est inesthétique et agressif au touché. Si le fond est connecté au corps du récipient, grâce au matériau du fond qui vient se disposer autour du corps du récipient à l'endroit de la trace visible dudit point d'injection, ledit point d'injection est alors caché par le matériau utilisé pour le fond du récipient. Selon un mode de réalisation préféré, le corps de récipient (20) est réalisé dans un thermoplastique indéformable et le fond (30) est réalisé dans un matériau thermoplastique souple.

Selon un mode de réalisation préféré, le corps de récipient (20) et le fond (30) sont inséparables.

Selon un mode de réalisation préféré, le fond comprend une paroi inférieure de forme convexe hémisphérique affinée en son centre afin d'améliorer le retour du fond vers sa position initiale après une déformation.

Le fond disposant d'une paroi de forme convexe hémisphérique, le volume interne du récipient peut donc être modifié en exerçant une pression sur l'extérieur de cette paroi avec les doigts. Lorsque ladite paroi du fond a été déformée, celle-ci doit pouvoir revenir dans sa position initiale sans risquer de provoquer une fuite du contenu entre le corps et le fond dans le cas d'un assemblage (art antérieur).

Selon un mode de réalisation préféré, le bouchon pourvu d'une bague d'inviolabilité. La présence de ladite bague d'inviolabilité est un élément rassurant pour le consommateur. En effet, celui-ci peut contrôler si le bouchon a été ouvert ou non.

Selon un mode de réalisation préféré, le bouchon est, en son intérieur, pourvu d'une jupe d'étanchéité adaptée pour rentrer en contact avec l'extrémité du distributeur comportant l'ouverture et assurer l'étanchéité entre le distributeur et le bouchon, une fois que le bouchon est fixé sur le corps du récipient. Selon un mode de réalisation préféré, le bouchon est pourvu d'un agent antibactérien permettant de conserver l'extrémité du distributeur comportant l'ouverture à l'abri des bactéries.

Selon un mode de réalisation préféré, le récipient est pourvu d'un opercule de protection connecté au fond, permettant d'éviter une pression accidentelle sur la matière souple du fond.

Selon un mode de réalisation préféré, le matériau pour obtenir le corps de récipient contient un agent piégeur d'oxygène permettant d'améliorer ainsi la capacité du récipient à éviter l'entrée d'oxygène à l'intérieur du récipient.

### Brève description des dessins

Le but, l'objet et les caractéristiques de la présente invention apparaîtront plus clairement à la lecture de la description qui suit faite en référence aux dessins dans lesquels :
- la figure 1 représente une vue de face du récipient selon la présente invention, et,
- la figure 2 représente une vue en coupe du récipient selon la figure 1.

### Description détaillée du mode de réalisation

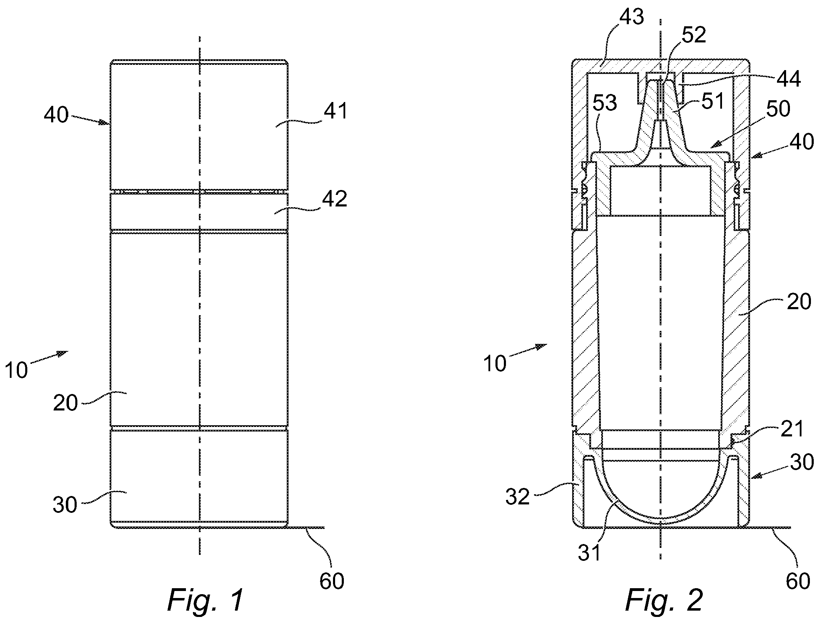

La figure 1 montre le récipient 10 selon l'invention qui comprend quatre parties distinctes dont trois sont visibles dans la figure 1. Le récipient 10 comporte tout d'abord un corps de récipient 20 qui est connecté, en son extrémité inférieure ou première extrémité, à un fond 30.

Sur le corps de récipient 20, en l'extrémité supérieur ou deuxième extrémité, un bouchon 40 est placé. Ce bouchon 40 comporte une première partie 41 à laquelle une bague d'inviolabité 42 a été connectée via des éléments cassables. Le fond 30 du récipient 10 selon l'invention est pourvu d'un opercule 60 permettant d'éviter que l'intérieur du fond (voir figure 2) ne puisse être mis sous tension avant sa première utilisation.

De plus, en combinaison avec la bague d'inviolabilité 42, l'opercule 60 sert de témoin de première utilisation. L'opercule 60 peut être réalisé à l'aide de tout matériau adapté et peut, par exemple, comporter de l'aluminium.

Dans la figure 2, le récipient 10 selon la figure 1 est montré dans une coupe. La figure 2 montre très clairement la forme du corps de récipient 20 avec, en sa première extrémité, le fond 30. La connexion entre le corps du récipient 20 et le fond 30 est obtenue grâce à une liaison par adhésion chimique. Cette liaison peut, par exemple, être obtenue grâce à un procédé selon lequel le corps de récipient 20 est réalisé en premier. Lorsque le corps de récipient 20 est réalisé, celui-ci est de nouveau introduit dans un moule où le fond 30 du récipient 10 sera réalisé directement contre la surface du corps du récipient 20.

Ce procédé, permettant d'obtenir simultanément le fond 30 et une connexion solide entre le fond 30 et le corps du récipient 20, est connu sous le terme « surmoulage ».

Il convient de noter que le corps de récipient 20 est réalisé à l'aide d'un matériau rigide. Avec ce terme « rigide », l'on fait référence à un matériau qui n'est pas aisément déformable sous la pression exercée avec les doigts, c'est-à-dire par une pression manuelle. Il peut s'agir, par exemple, d'un matériau plastique tel que le copolymère dont la propriété hermétique permet une conservation stable et durable du contenu reçu à l'intérieur du récipient.
La rigidité du matériau permet également une durée de vie optimale du récipient 10.

Le corps de récipient 20, réalisé dans un matériau rigide, est par exemple obtenu grâce à un procédé selon laquelle une matière thermoplastique est injectée à l'intérieur d'un moule. Ce procédé laisse toujours des traces montrant le point d'injection de ladite matière thermoplastique dans le moule.

Dans la figure 2, cette trace du point d'injection est indiquée avec le numéro 21. Selon l'invention, le matériau permettant de réaliser le fond 30 est placé, par rapport au corps du récipient, de telle sorte que le point d'injection 21 soit caché par la matière composant le fond 30, une fois que le récipient 10 selon l'invention est obtenu.

Le fond 30 du récipient 10 selon l'invention présente deux éléments principaux. Tout d'abord, le fond 30 comprend une paroi de forme convexe hémisphérique 31 formant la continuité de l'intérieur du corps de récipient.

Autour de cette paroi 31, de forme concave hémisphérique, une paroi 32 de forme cylindrique est présente, laquelle formant la continuité de l'extérieur du corps du récipient 20. Cette paroi 32, de forme cylindrique, permet le maintien vertical du récipient 10 selon l'invention et permetégalement une protection de la paroi 31 de forme convexe hémisphérique, évitant ainsi la déformation involontaire de ladite paroi 31.

Le fond 30 est réalisé à l'aide d'un matériau plastique souple, tel qu'un matériau thermoplastique élastomère. Ce matériau est à la fois flexible et déformable sous une pression manuelle. La paroi 31 étant réalisée à l'aide d'un matériau souple, celle-ci peut être déplacée de sa position initiale (montrée en figure 2) vers une position déformée dans laquelle ladite paroi est déformée avec le pouce, par exemple, en direction du bouchon 40 du dispositif 10 selon l'invention.

En déformant la paroi 31, le volume interne du récipient 10 se trouve diminué. Cette diminution du volume peut être utilisée pour faire sortir du produit de l'extrémité ouverte (décrite ci-dessous) vers l'extérieur. Tout en garantissant une parfaite étanchéité au moment de la déformation.

Afin d'améliorer les possibilités de déformer la paroi 31, de sa position initiale vers une position déformée, et permettre à la paroi de revenir dans sa position initiale, ladite paroi 31 est affinée en son centre.

Le fond 30 est fermé en son côté inférieur grâce à un opercule 60 afin d'éviter que la paroi ne soit touchée de façon involontaire. Comme déjà indiqué en faisant référence à la figure 1, l'opercule 60 peut être la preuve d'une première utilisation du récipient 10 selon l'invention.

Le corps de récipient 20 est, en son extrémité supérieure ou deuxième extrémité, fermé grâce à un distributeur 50. Ce distributeur est pourvu d'un élément en forme de cône 51 qui fonctionne comme « applicateur ». Ce cône 51 est pourvu d'une ouverture 52 permettant de laisser sortir le produit contenu à l'intérieur du récipient 10 selon l'invention. Il convient de souligner, dans un premier temps, que la liaison entre l'extérieur du distributeur 50 et l'intérieur de la paroi du corps de récipient 20 autour de sa deuxième extrémité doit être optimale. En effet, cette liaison optimale permet d'éviter que la connexion entre le corps du récipient 20 et le distributeur 50 soit perdue lorsqu'une pression est exercée sur l'intérieur du récipient 10 selon l'invention lors de la déformation de la paroi 31.

Il est important de noter que, dans un deuxième temps, que les connexions entre le corps de récipient 20 et le distributeur 30 sont étanches.

Comme cela est montré en figure 2, le distributeur 50 est pourvu d'épaulements 53. La présence des épaulements 53 permet de limiter l'insertion du distributeur à l'intérieur du corps de récipient 20. En d'autres termes, le distributeur 50 peut être inséré avec force à l'intérieur de la deuxième extrémité du corps de récipient 20 tout en conservant une insertion limitée. Les épaulements 53 assurent donc un positionnement correct du distributeur 50 dans la deuxième extrémité du corps du récipient 20.

Le corps de récipient 20 est, en son extérieur et autour de la deuxième extrémité, pourvu d'un filetage. L'intérieur du bouchon est également pourvu d'un filetage afin de s'assurer que ledit bouchon peut être fixé sur l'extérieur du corps de récipient grâce audit filetage.

Le bouchon 40 est pourvu d'une paroi 41 formant la surface supérieure du récipient 10. A l'intérieur de cette paroi 41, le bouchon 40 est pourvu d'une jupe d'étanchéité intérieure 42, laquelle est adaptée au diamètre extérieur du cône 51 du distributeur 50. En d'autres termes, l'extrémité du cône 51 et l'ouverture 52 peuvent être correctement fermées grâce au bouchon 40 pourvu de cette jupe d'étanchéité intérieure 42.

Pour des raisons d'ordre pratique, dans les figures 1 et 2, l'on fait référence au récipient 10, principalement de forme cylindrique. Il convient de noter que toute autre forme adaptée, par exemple une forme carrée, peut également être utilisée.

Par ailleurs, la forme exacte du distributeur 50 peut être modifiée en fonction du contenu reçu à l'intérieur du récipient 10. De ce fait, en fonction des caractéristiques du contenu reçu à l'intérieur du récipient 10, il est possible de donner au cône 51 une forme spécifique et à l'ouverture 52 à l'intérieur du cône 31.

## Revendications

1. Récipient (10) comprenant un corps de récipient (20), un fond (30) fixé à une première extrémité du corps de récipient (20), un distributeur (50) pour fermer la deuxième extrémité du corps de récipient (20), pourvu d'une ouverture (52) permettant la sortie du contenu du récipient (10) et un bouchon (40) permettant d'obturer l'ouverture (52) du distributeur (50), dans lequel le corps du récipient (20) est réalisé dans un matériau rigide et le fond (30) est réalisé dans un matériau souple pour permettre la déformation du fond (30) sous la pression manuelle et dans lequel le fond (30) est réalisé de sorte que la déformation du fond (30) ait pour effet une réduction du volume interne du récipient (10), la liaison entre le corps de récipient (20), en matière rigide, et le fond (30), en matière souple, est une liaison par adhésion chimique, **caractérisé en ce que** le distributeur (50) comprends des épaulements (53) permettant de limiter l'insertion du distributeur avec force à l'intérieur de la deuxième extrémité du corps du récipient (20).

2. Récipient (10) selon la revendication 1, dans lequel la liaison entre le corps de récipient (20) et le fond (30) est obtenue par surmoulage.

3. Récipient (10) selon la revendication 1 ou 2, dans lequel le corps de récipient (20) est obtenu grâce à une matière thermoplastique injectée par au moins un point d'injection, et dans lequel la liaison entre le corps du récipient (20) et le fond (30) est réalisée de sorte que la matière du fond (30) cache au moins ce point d'injection.

4. Récipient (10) selon la revendication 1 à 3, dans lequel le corps de récipient (20) est réalisé dans un thermoplastique indéformable et le fond (30) est réalisé dans un matériau thermoplastique souple.

5. Récipient (10) selon la revendication 1 à 4, dans lequel le corps de récipient (20) et le fond (30) sont inséparables.

6. Récipient (10) selon l'une des revendications 1 à 5, dans lequel le fond (30) comprend une paroi inférieure (31) de forme connexe hémisphérique affinée en son centre afin d'améliorer le retour du fond (30) vers sa position initiale après une déformation.

7. Récipient (10) selon l'une des revendications 1 à 6, dans lequel le bouchon (40) est pourvu d'une bague d'inviolabité (42).

8. Récipient (10) selon l'une des revendications 1 à 7, dans lequel le bouchon (40) est, en son intérieur, pourvu d'une jupe d'étanchéité (42) adaptée pour rentrer en contact avec l'extrémité du distributeur (50) comportant l'ouverture (52) et assurer l'étanchéité entre le distributeur (50) et le bouchon (40), une fois que le bouchon (40) est fixé sur le corps du récipient (20).

9. Récipient selon l'une des revendications 1 à 8, dans lequel le bouchon (40) est pourvu d'un agent antibactérien permettant de conserver l'extrémité du distributeur (50) comportant l'ouverture (52) à l'abri des bactéries.

10. Récipient (10) selon l'une des revendications 1 à 9, dans lequel le récipient (10) est pourvu d'un opercule de protection(60) connecté au fond (30), permettant d'éviter une pression accidentelle sur la matière souple du fond (30).

11. Récipient (10) selon l'une des revendications 1 à 10, dans lequel le matériau pour obtenir le corps de récipient (20) contient un agent piégeur d'oxygène permettant d'améliorer ainsi la capacité du récipient (10) à éviter l'entrée d'oxygène à l'intérieur du récipient (10).

## Patentansprüche

1. Ein Behälter (10), beinhaltend einen Behälterkörper (20), einen Boden (30), der an einem ersten Ende des Behälterkörpers (20) angebracht ist, einen Verteiler (50) zum Schließen des zweiten Endes des Behälterkörpers (20), versehen mit einer Öffnung (52), die das Austreten des Inhalts des Behälters (10) gestattet, und einen Stopfen (40), der das Verschließen der Öffnung (52) des Verteilers (50) gestattet, wobei der Behälterkörper (20) aus einem steifen Material hergestellt ist und der Boden (30) aus einem biegsamen Material hergestellt ist, um die Verformung des Bodens (30) unter manuellem Druck zu gestatten, und wobei der Boden (30) derart hergestellt ist, dass die Verformung des Bodens (30) eine Verringerung des Innenvolumens des Behälters (10) bewirkt, wobei die Verbindung zwischen dem Behälterkörper (20), aus steifem Material, und dem Boden (30), aus biegsamem Material, eine Verbindung durch chemische Adhäsion ist, **dadurch gekennzeichnet, dass** der Verteiler (50) Schultern (53) beinhaltet, welche das Begrenzen des Einsetzens des Verteilers mit Kraft in das Innere des zweiten Endes des Behälterkörpers (20) gestattet.

2. Behälter (10) gemäß Anspruch 1, wobei die Verbindung zwischen dem Behälterkörper (20) und dem Boden (30) durch Umspritzen erhalten wird.

3. Behälter (10) gemäß Anspruch 1 oder 2, wobei der Behälterkörper (20) durch das Einspritzen eines thermoplastischen Werkstoffs durch mindestens eine Einspritzstelle erhalten wird, und wobei die Verbindung zwischen dem Behälterkörper (20) und dem Boden (30) so hergestellt wird, dass das Material des Bodens (30) mindestens diese Einspritzstelle verdeckt.

4. Behälter (10) gemäß Anspruch 1 bis 3, wobei der Behälterkörper (20) aus einem formbeständigen Thermoplast hergestellt ist und der Boden (30) aus einem biegsamen thermoplastischen Material hergestellt ist.

5. Behälter (10) gemäß Anspruch 1 bis 4, wobei der Behälterkörper (20) und der Boden (30) nicht trennbar sind.

6. Behälter (10) gemäß einem der Ansprüche 1 bis 5, wobei der Boden (30) eine untere Wand (31) in zusammenhängender Halbkugelform beinhaltet, deren Mitte angespitzt ist, um die Rückkehr des Bodens (30) in seine ursprüngliche Position nach einer Verformung zu verbessern.

7. Behälter (10) gemäß einem der Ansprüche 1 bis 6, wobei der Stopfen (40) mit einem manipulationssicheren Ring (42) versehen ist.

8. Behälter (10) gemäß einem der Ansprüche 1 bis 7, wobei der Stopfen (40) in seinem Inneren mit einem Dichtungsmantel (42) versehen ist, der angepasst ist, um mit dem Ende des die Öffnung (52) beinhaltenden Verteilers (50) in Kontakt zu treten und die Dichtung zwischen dem Verteiler (50) und dem Stopfen (40) sicherzustellen, sobald der Stopfen (40) auf dem Behälterkörper (20) befestigt worden ist.

9. Behälter gemäß einem der Ansprüche 1 bis 8, wobei der Stopfen (40) mit einem antibakteriellen Mittel versehen ist, um das Ende des die Öffnung (52) beinhaltenden Verteilers (50) bakterienfrei zu halten.

10. Behälter (10) gemäß einem der Ansprüche 1 bis 9, wobei der Behälter (10) mit einem mit dem Boden (30) verbundenen Schutzdeckel (60) versehen ist, was einen versehentlichen Druck auf das biegsame Material des Bodens (30) verhindern kann.

11. Behälter (10) gemäß einem der Ansprüche 1 bis 10, wobei das Material zum Erhalten des Behälterkörpers (20) ein Sauerstoffeinfangmittel enthält, das die Fähigkeit des Behälters (10), das Eindringen von Sauerstoff in das Innere des Behälters (10) zu verhindern, verbessert.

## Claims

1. A container (10) comprising a container body (20), a base (30) fixed to a first end of the container body (20), a distributor (50) for closing the second end of the container body (20), equipped with an aperture (52) which makes it possible for the contents of the container (10) to exit and a stopper (40) which makes it possible to close the aperture (52) of the distributor (50), wherein the container body (20) is made from a rigid material and the base (30) is made from a flexible material to make it possible for the base (30) to deform under manual pressure and wherein the base (30) is made such that the deformation of the base (30) causes a reduction of the inner volume of the container (10), the connection between the container body (20), made from a rigid material, and the base (30), made from a flexible material, is a connection by chemical adhesion, **characterised in that** the distributor (50) comprises shoulders (53) which make it possible to limit the forced insertion of the distributor into the second end of the container body (20).

2. The container (10) according to claim 1, wherein the connection between the container body (20) and the base (30) is obtained by overmoulding.

3. The container (10) according to claim 1 or 2, wherein the container body (20) is obtained by means of a thermoplastic material injected by at least one injection tip, and wherein the connection between the container body (20) and the base (30) is made such that the material of the base (30) conceals at least this injection tip.

4. The container (10) according to claims 1 to 3, wherein the container body (20) is made from a non-deformable thermoplastic and the base (30) is made from a flexible thermoplastic.

5. The container (10) according to claims 1 to 4, wherein the container body (20) and the base (30) are inseparable.

6. The container (10) according to one of claims 1 to 5, wherein the base (30) comprises a lower wall (31) with a connected hemispherical shape which grows narrower at its centre in order to improve the return of the base (30) to its starting position after a deformation.

7. The container (10) according to one of claims 1 to 6, wherein the stopper (40) is equipped with a tamper-resistant ring (42).

8. The container (10) according to one of claims 1 to 7, wherein the stopper (40) is, in its interior, equipped with a sealing skirt (42) suitable for coming into contact with the end of the distributor (50) containing the aperture (52) and for ensuring the seal between the distributor (50) and the stopper (40), once the stopper (40) is fixed onto the container body (20).

9. The container according to one of claims 1 to 8, wherein the stopper (40) is equipped with an antibacterial agent which makes it possible to keep the end of the distributor (50) containing the aperture (52) free from bacteria.

10. The container (10) according to one of claims 1 to 9, wherein the container (10) is equipped with a protective cover (60) connected to the base (30), which makes it possible to prevent accidental pressure on the flexible material of the base (30).

11. The container (10) according to one of claims 1 to 10, wherein the material for obtaining the container body (20) contains an oxygen-trapping agent which thus makes it possible to improve the ability of the container (10) to prevent the entry of oxygen into the container (10).
